(19) Europäisches Patentamt
European Patent Office
Office européen des brevets

(11) EP 3 604 379 A1

(12) # EUROPEAN PATENT APPLICATION
published in accordance with Art. 153(4) EPC

(43) Date of publication:
**05.02.2020 Bulletin 2020/06**

(21) Application number: **18774815.7**

(22) Date of filing: **08.03.2018**

(51) Int Cl.:
***C08G 63/183*** (2006.01) ***G03G 9/087*** (2006.01)

(86) International application number:
**PCT/JP2018/008954**

(87) International publication number:
**WO 2018/180335 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.03.2017 JP 2017062977**

(71) Applicant: **Toyobo Co., Ltd.**
**Osaka-shi**
**Osaka 530-8230 (JP)**

(72) Inventors:
- **ISHIKURA, Masami**
**Otsu-shi**
**Shiga 520-0292 (JP)**
- **SHIMENO, Katsuya**
**Otsu-shi**
**Shiga 520-0292 (JP)**

(74) Representative: **Vossius & Partner**
**Patentanwälte Rechtsanwälte mbB**
**Siebertstrasse 3**
**81675 München (DE)**

(54) **POLYESTER RESIN HAVING EXCELLENT STORAGE STABILITY**

(57) The present invention aims to provide a polyester resin having excellent adhesion to metal and curability and also having good storage stability. A polyester resin prepared from polyvalent arboxylic acid and glycol, characterized in that a total content of a terephthalic acid ingredient and an isophthalic acid ingredient is 70% by mol or more when a total content of the polyvalent carboxylic acid ingredient is taken as 100% by mol, a total content of an ethylene glycol ingredient and a 2,2-dimethyl-1,3-propanediol ingredient is 80% by mol or more when a total content of the glycol ingredient is taken as 100% by mol, its acid value is 5 mg KOH/g or more, a total content of an unreacted polyvalent carboxylic acid ingredient is 2,000 ppm or less and a content of a cyclic oligomer is 0.5% by mass or less.

EP 3 604 379 A1

## Description

Technical Field of the Invention

The present invention relates to a polyester resin having excellent storage stability.

Background Art

In order to impart adhesion, curability and dispersibility, a polyester resin wherein carboxylic acid is introduced into its polymer terminal has been used as a binder or a coating agent for a screen ink. However, in case of a polyester resin having an acid value, unreacted acid ingredients may sometimes remain and thus acid decomposition of the polyester resin may occur. Accordingly, there is a problem in terms of the storage stability in a solid form.

In Patent Document 1, there is disclosed a polyester resin wherein a content of acid ingredients and a content of lower alkyl ester of carboxylic acid in the polyester resin are limited to 200 to 1,000 ppm. This resin achieves both of low-temperature fixability and hot-offset resistance, and thus exhibits excellent pigment dispersibility, durability, charging stability and image quality stability.

In addition, there is proposed a production method wherein a distillation treatment is carried out after polyester is polymerized so as to reduce oligomers (Patent Document 2) .

Prior Art Documents

Patent Documents

Patent Document 1: Japanese Patent Application Laid-Open (JP-A) No. 2013-178504
Patent Document 2: Japanese Patent Application Laid-Open (JP-A) No. 2002-212530

Disclosure of the Invention

Problem that the Invention is to Solve

In Patent Document 1 however, cyclic oligomers which are produced by a reaction of an aromatic dicarboxylic acid such as terephthalic acid or isophthalic acid with an aliphatic glycol such as ethylene glycol or 2,2-dimethyl-1,3-propanediol are not taken into consideration. Accordingly, there is a problem of bad storage stability. Specifically, the cyclic oligomers are separated out during a storage when the polyester resin is dissolved in a solvent or dispersed in water.

Further, in the production method disclosed in Patent Document 2, there is a problem in terms of cost. Specifically, production steps increase which requires a long cycle time and an installment therefor.

The present invention aims to provide a polyester resin in which characteristic properties such as adhesion to metal and curability are still maintained while storage stability is also achieved by reducing amounts of oligomers and unreacted monomers generated during the polymerization. Means for Solving the Problem

The present inventors have accomplished the present invention as a result of their extensive studies for solving the above problems. Thus, the present invention consists of the following constitution.

A polyester resin prepared from polyvalent carboxylic acid and glycol, characterized in that
a total content of a terephthalic acid ingredient and an isophthalic acid ingredient is 70% by mol or more when a total content of the polyvalent carboxylic acid ingredient is taken as 100% by mol,
a total content of an ethylene glycol ingredient and a 2,2-dimethyl-1,3-propanediol ingredient is 80% by mol or more when a total content of the glycol ingredient is taken as 100% by mol,
its acid value is 5 mg KOH/g or more,
a total content of an unreacted polyvalent carboxylic acid ingredient is 2,000 ppm or less and
a content of a cyclic oligomer is 0.5% by mass or less.

Preferably, a number-average molecular weight of the above polyester resin is 25,000 or less.

Advantages of the Invention

In accordance with the present invention, it is now possible to provide a polyester resin having excellent adhesion to metal and curability and also having good storage stability. Best Mode for Carrying Out the Invention

As hereinafter, the present invention will be illustrated in detail.

In the polyester resin of the present invention, the acid value is 5 mg KOH/g or more, and preferred to be 10 mg KOH/g or more. When the acid value is less than 5 mg KOH/g, the adhesion to metal and the curability may be inferior. Further, the acid value is preferred to be 30 mg KOH/g or less, and more preferred to be 20 mg KOH/g or less. When it is more than 30 mg KOH/g, decomposition of the polyester resin may be promoted by acid and the storage stability may worsen.

Although the number-average molecular weight of the polyester resin of the present invention is not particularly limited, it is preferred to be 25,000 or less, and more preferred to be 20,000 or less. When it is more than 25,000, it may be difficult to control the acid value to be 5 mg KOH/g or more whereby the adhesion to metal, the curability or the dispersibility may be inferior. Further, it is preferred to be 1,000 or more, and more preferred to be 3,000 or more. When it less than 1,000, the resulting polyester resin may become fragile and handling property upon its application may worsen.

The polyester resin of the present invention is prepared from polyvalent carboxylic acid and glycol. As to the polyvalent carboxylic acid ingredient constituting the polyester resin, it is necessary that a total content of a terephthalic acid ingredient and an isophthalic acid ingredient is 70% by mol or more when a total content of the polyvalent carboxylic acid ingredient is taken as 100% by mol. The total content of a terephthalic acid ingredient and an isophthalic acid ingredient is preferred to be 75% by mol or more, and more preferred to be 80% by mol or more. When it is too small, the storage stability may worsen. The total content of a terephthalic acid ingredient and an isophthalic acid ingredient is preferred to be 99% by mol or less, and more preferred to be 98% by mol or less. When it is too much, it may be difficult to impart the acid value whereby the adhesion to metal and the curability may lower.

As to the polyvalent carboxylic acid ingredient other than the terephthalic acid ingredient and the isophthalic acid ingredient, there is no limitation and it is possible to use the polyvalent carboxylic acid and the polyvalent carboxylic acid anhydride as shown below. To be more specific, there is exemplified o-phthalic acid, adipic acid, sebacic acid, dimer acid, 1,4-cyclohexane dicarboxylic acid, fumaric acid, maleic acid, 5-sodium sulfodimethylisophthalate, trimellitic acid or pyromellitic acid as the polyvalent carboxylic acid. As to the polyvalent carboxylic acid anhydride, there are exemplified phthalic anhydride, tetrahydrophthalic anhydride, succinic anhydride, trimellitic anhydride, pyromellitic anhydride and hexahydrophthalic anhydride. Preferably, trimellitic anhydride may be exemplified. A total content of the polyvalent carboxylic acid or the polyvalent carboxylic acid anhydride as such is preferred to be 30% by mol or less, more preferred to be 25% by mol or less, and furthermore preferred to be 20% by mol or less when the total content of the polyvalent carboxylic acid ingredient is taken as 100% by mol. Among them, it is preferred to contain 1% by mol or more of trimellitic anhydride which is the polyvalent carboxylic acid anhydride. Further, it is more preferred to contain 2% by mol to 5% by mol, and furthermore preferred to contain 4% by mol or less of trimellitic anhydride which is the polyvalent carboxylic acid anhydride. When the content of the aliphatic dicarboxylic acid is more than 30% by mol, resistance to heat and resistance to hydrolysis may be insufficient.

As to the glycol ingredient constituting the polyester resin of the present invention, it is necessary that a total content of an ethylene glycol ingredient and a 2,2-dimethyl-1,3-propanediol ingredient is 80% by mol or more when a total content of the glycol ingredient is taken as 100% by mol. The total content of an ethylene glycol ingredient and a 2,2-dimethyl-1,3-propanediol ingredient is preferred to be 85% by mol or more, more preferred to be 90% by mol or more, and furthermore preferred to be 95% by mol or more. There is no problem even if it is 100% by mol. When it is too small, the adhesion to metal, the curability and the storage stability may lower.

As to the glycol ingredient other than the ethylene glycol ingredient and the 2,2-dimethyl-1,3-propanediol ingredient, there are exemplified an aliphatic glycol such as propylene glycol, 1,3-propanediol, 3-methyl-1,5-pentanediol, 1,4-butanediol, 1,4-pentanediol, 1,3-pentanediol, 2,4-diethyl-1,5-pentanediol, 1,6-hexanediol, 1-methyl-1,8-octanediol, 3-methyl-1,6-hexanediol, 4-methyl-1,7-heptanediol, 4-methyl-1,8-octanediol, 4-propyl-1,8-octanediol and 1,9-nonanediol; a polyether glycol such as diethylene glycol, triethylene glycol, polyethylene glycol, polypropylene glycol and polytetramethylene glycol; and an alicyclic polyalcohol such as 1,4-cyclohexane dimethanol, 1,3-cyclohexane dimethanol, 1,2-cyclohexane dimethanol, tricyclodecane glycol and hydrogenated bisphenol. One or more member(s) may be selected from the above and used. It is preferred that the glycol as such is 20% by mol or less, more preferred to be 15% by mol or less, and furthermore preferred to be 10% by mol or less when the total content of the glycol ingredient is taken as 100% by mol. Among them, 1,4-butanediol, 1,4-cyclohexane dimethanol or diethylene glycol is preferred.

As to a method for polymerizing the polyester resin, it may be a method wherein the polyvalent carboxylic acid ingredient is reacted with the glycol ingredient (a direct polymerization method) or a method wherein the polyvalent carboxylate is reacted with the glycol ingredient (an ester interchange method). There is no difference in terms of properties between a polyester resin prepared by the direction polymerization method and a polyester resin prepared by the ester interchange method.

As to a method for imparting the acid value to the polyester resin of the present invention (acid addition), there are an acid addition method (after-addition) wherein a polyvalent carboxylic acid anhydride is added in a latter stage of polycondensation, and a method wherein, in a stage of a prepolymer (oligomer), its acid value is increased and, after that, it is subjected to polycondensation to give a polyester resin having an acid value. The former acid-addition method is preferred because its operation is easy and aimed acid value can be easily achieved.

As to the polyvalent carboxylic acid anhydride used for acid addition in the acid addition method as such, there is no particular limitation and there are exemplified phthalic anhydride, tetrahydrophthalic anhydride, succinic anhydride, trimellitic anhydride, pyromellitic anhydride, hexahydrophthalic anhydride, 3,3,4,4-benzophenonetetracarboxylic anhydride, 3,3,4,4-biphenyltetracarboxylic dianhydride and ethylene glycol bisanhydrotrimellitate. Among them, trimellitic anhydride is preferred.

A content of the unreacted polyvalent carboxylic acid ingredient and the cyclic oligomer in the present invention can be measured by the following methods.

<Preparation of Samples>

1. Polyester resin (100 mg) is dissolved in 2 ml of chloroform to give a solution.
2. To this solution is added 18 ml of acetonitrile to conduct a reprecipitation followed by conducting a centrifugal separation.
3. A supernatant liquid (2 ml) after the centrifugal separation is evaporated to dryness (i.e. the solvent was completely distilled off) and then dissolved in 250 $\mu$l of DMF (N,N-dimethylformamide) to prepare a sample.
4. Measurement is conducted under following conditions by means of a high performance liquid chromatography(HPLC).

<Measuring Condition in HPLC)

Apparatus: ACQUITY UPLC (manufactured by Waters)
Column: BEH-C18 2.1 $\times$ 150 mm (manufactured by Waters)
Mobile phase:

Eluate A: 0.1% aqueous solution of formic acid (v/v)
Eluate B: acetonitrile
Gradient B %: 5 $\rightarrow$ 98 $\rightarrow$ 98% (0 $\rightarrow$ 25 $\rightarrow$ 35 min)

Flow rate: 0.2 ml/minute
Column temperature: 40°C
Detector: UV-258 nm

<Quantifying Method>

Under the above analytic condition in HPLC, standards (the following four) of each of the unreacted acid ingredients and each of the cyclic oligomer are measured whereby eluting time is confirmed and peak area of each ingredient is measured. After that, the sample is measured under the above analytic condition in HPLC and then the amounts of the unreacted acid ingredient and the cyclic oligomer (a total amount of a dimer of terephthalic acid-ethylene glycol, a dimer of isophthalic acid-ethylene glycol, a trimer of terephthalic acid-2,2-dimethyl-1,3-propanediol and a trimer of isophthalic acid-2,2-dimethyl-1,3-propanediol) are calculated (an absolute calibration method) by means of a ratio of a peak area value of the resulting chromatogram to a peak area value of the standard.

In the present invention, the total content of the unreacted polyvalent carboxylic acid ingredients is 2,000 ppm or less, and preferably 1,000 ppm or less. When it is more than 2,000 ppm, decomposition of the polyester resin by an acid may occur whereby the storage stability may worsen. As to the unreacted polyvalent carboxylic acid ingredient, less amount is better. Accordingly, there is no particular limitation for a lower limit. However, in industrial view, the lower limit is 300 ppm.

As to the above unreacted polyvalent carboxylic acid ingredient, there are exemplified all polyvalent carboxylic acid ingredients including unreacted terephthalic acid and unreacted isophthalic acid. Here, the unreacted polyvalent carboxylic acid stands for polyvalent carboxylic acid ingredients which did not become polyester resin and oligomer. For example, a polyvalent carboxylic acid derived from a mere ring-opening of trimellitic anhydride by its reaction with water is also covered by the polyvalent carboxylic acid.

In order to limit the total content of the unreacted polyvalent carboxylic acid ingredients to be 2,000 ppm or less, it is preferred that a reaction temperature is set to be 210°C or higher, more preferred to be 220°C or higher and 240°C or lower, and furthermore preferred to be 230°C or lower as a condition upon a modification (after-addition) of carboxyl group. In addition, a reaction time is preferred to be 1 hour or more, more preferred to be 2 hours or more and 4 hours or less, and furthermore preferred to be 3 hours or less. As a result of conducting the modification (after-addition) of the carboxyl group under the above condition, the total content of the unreacted polyvalent carboxylic acid ingredients can be limited to be 2,000 ppm or less. When the reaction temperature is higher than 240°C or the reaction time is long, gelling may happen. When the reaction temperature is lower than 210°C or the reaction time is short, efficiency of the carboxyl group modification may lower whereby the unreacted polyvalent carboxylic acid ingredients may abundantly remain.

It is necessary in the present invention that the content of cyclic oligomer is 0.5% by mass or less. It is preferred to be 0.4% by mass or less, more preferred to be 0.3% by mass or less, and furthermore preferred to be 0.2% by mass or less. When the content of cyclic oligomer is more than 0.5% by mass, the cyclic oligomer is separated out during a storage in a solution state whereby the storage stability is apt to lower. As to the cyclic oligomer, less amount is better. Accordingly, there is no particular limitation for a lower limit. However, in industrial view, the lower limit is 0.1% by mass.

As to the cyclic oligomer in the present invention, there are exemplified a dimer of terephthalic acid-ethylene glycol, a dimer of isophthalic acid-ethylene glycol, a trimer of terephthalic acid-2,2-dimethyl-1,3-propanediol and a trimer of isophthalic acid-2,2-dimethyl-1,3-propanediol.

In order to limit the content of cyclic oligomer 0.5% by mass or less, there exemplified a method wherein polycondensation is carried out under a high vacuum condition so that the cyclic oligomer is discharged to an outside together with an excessive glycol and a method wherein an aluminum-type catalyst is used so as to suppress generation of the cyclic oligomer. When the polycondensation is done under the high vacuum condition, it is preferred that a space in the system is kept at 200°C or higher, more preferred to be 210°C or higher, and furthermore preferred to be 220°C or higher. Further, it is preferred that a pressure in terms of absolute pressure is 50 mmHg or lower, more preferred to be 30 mmHg or lower, and furthermore preferred to be 10 mmHg or lower.

The polyester resin of the present invention is excellent in the adhesion to metal, curability and storage stability. Accordingly, it is suitable to be used in a coating. Examples

Hereinafter, there are shown Examples in order to more specifically illustrate the present invention. However, the present invention is not limited by those Examples at all. Measured values mentioned in Examples were measured by the methods shown below. An expression reading just "part(s)" in Examples and Comparative Examples stands for "part (s) by mass".

(1) Measurement of resin composition

Samples of a polyester resin and a curable resin were dissolved in heavy chloroform. $^1$H-NMR analysis was conducted using 400-MR (an NMR apparatus manufactured by VARIANT). A molar ratio was determined from a ratio of resulting integral values thereof.

(2) Measurement of number-average molecular weight

A sample (polyester resin) was dissolved in tetrahydrofuran so as to make a sample concentration 0.5% by mass and then filtered through a membrane filer made of poly(ethylene tetrafluoride) of 0.5 μm pore size whereupon a sample for the measurement was prepared. Number-average molecular weight was measured by gel permeation chromatography (GPC) using tetrahydrofuran as a mobile phase and a differential refractometer as a detector. Flow rate was set to be 1 mL/minute and column temperature was set to be 30°C. As to the columns, KF-802, 804L and 806L manufactured by Showa Denko were used. Measurement was conducted using a calibration curve of monodispersed standard polystyrene as a standard for molecular weight. However, when the sample was insoluble in tetrahydrofuran, N,N-dimethylformamide was used in place of tetrahydrofuran. Low-molecular compound (such as oligomer) having the number-average molecular weight of less than 1000 was not counted but omitted.

(4) Measurement of glass transition temperature (°C)

Differential scanning colorimeter (DSC 220 type) manufactured by Seiko Denshi Kogyo was used. A sample (polyester resin) to be measured (5 mg) was placed in an aluminum pan, tightly sealed by pushing a cover and held for one time at 250°C for 5 minutes. After that, it was quickly cooled with liquid nitrogen. Then, the measurement was conducted under a temperature-rising rate of 20°C/minute from -150°C to 250°C. An inflection point of a resulting curve was adopted as the glass transition temperature.

(5) Measurement of acid value (mg KOH/g)

A sample (polyester resin) (0.2 g) was dissolved in 20 ml of chloroform to prepare a solution. Titration was done with 0.1N ethanolic solution of KOH using phenolphthalein as an indicator. From a resulting titrated value, mg numbers of KOH consumed for neutralization were converted into an amount per gram of the polyester resin whereby the acid value (mg KOH/g) was calculated.

(6) Storage stability

A polyester resin was dissolved in ethyl acetate so as to prepare a resin solution having a solid content of 30% by mass. The polyester resin and the resin solution were stored at 25°C or 40°C, respectively for three months. After the storage, it was confirmed whether there was a decrease in molecular weight for the polyester resin. For the resin solution, it was confirmed whether there was a haze.

(Standards for Evaluation)

○○: In both cases of 25°C and 40°C, there was no change in the molecular weight of the polyester resin, there was no generation of haze in the resin solution and, even after storing for additional three months, there was no change in the molecular weight of the polyester resin and there was no generation of haze in the resin solution.
○: In both cases of 25°C and 40°C, there was no change in the molecular weight of the polyester resin and there was no generation of haze in the resin solution.
Δ: In both cases of 25°C and 40°C, "Although there was no change in the molecular weight of the polyester resin, there was generation of haze in the resin solution." or "Although the molecular weight of the polyester resin lowered, there was no generation of haze in the resin solution."
×: In both cases of 25°C and 40°C, the molecular weight of the polyester resin lowered and haze was generated in the resin solution.

(7) Preparation of sample for a coating film

The polyester resin was dissolved in ethyl acetate so as to make a solid content 50% by mass whereupon a polyester resin solution was prepared. After that, to the polyester resin solution was added methylated melamine resin (Cymel 303 (registered trade mark) manufactured by Nippon Saitech). The adding amount was 5 parts by mass of methylated melamine resin for 100 parts by mass of the polyester resin. Then, the resulting mixture was well stirred whereupon a sample for a coating film was prepared.

(8) Adhesion to metal (grid tape peeling test)

The above sample for a coating film was coated onto a metal aluminum plate (#5052; 70 mm × 150 mm × 0.3 mm) using a bar coater so that a film thickness after drying was made 4 to 8 μm. After that, a bake hardening was conducted to prepare a sample for testing the adhesion to metal. The baking condition was at 250°C (PMT or highest reaching temperature) for one minute. One hundred grids in 1 mm intervals were formed by a cutter knife on a coated surface of the above sample for testing the adhesion to metal. An adhesive cellophane tape was tightly adhered thereon and peeled off in an angle of 60°. The adhesion to metal was evaluated as a rate of grids which were not peeled off. When no grids were peeled off at all, the adhesion to metal is 100% while all grids were peeled off, the adhesion to metal is 0%.

(9) Curability (gel fraction)

The above sample for a coating film was coated onto a polyethylene terephthalate film (PET film) so that a thickness after drying was made 20 μm followed by drying with hot air of 120°C for one hour whereupon a sample for testing the curability was prepared. After that, the sample was immersed in a solution of MEK (methyl ethyl ketone) and toluene in a ratio of 1:1 part by mass at room temperature for one hour in such a manner that the sample was completely immersed. After that, gel fraction was determined from an amount of non-dissolved remainder by the following formula.

Gel fraction (%) = [(mass of the sample for testing the curability after the immersion) - (mass of the PET film)] / [(mass of the sample for testing the curability before the immersion) - (mass of the PET film)] × 100

(Standard for Evaluation)

○: 90% or more
Δ: 70% or more and less than 90%
×: less than 70%

Synthesis of polyester resins (a) to (h) of the present invention

<Example 1> Polyester resin (a)

Into a three-liter flask were charged 500 parts of dimethyl terephthalate, 500 parts of dimethyl isophthalate, 480 parts of ethylene glycol, 270 parts of 2,2-dimethyl-1,3-propanediol and 5 parts of titanium tetrabutoxide. Temperature was gradually raised up to 220°C during four hours to conduct an ester interchange reaction. After that, an initial polymerization *in vacuo* was conducted by decreasing to 10 mmHg during 30 minutes and, at the same time, temperature was raised up to 250°C. Then, a latter-stage polymerization was conducted as it was for 90 minutes at 1 mmHg or lower. After that, the state of vacuum was ceased, temperature was cooled down to 220°C in a nitrogen stream, 25 parts of trimellitic anhydride was added thereto and the mixture was stirred at 220°C for one hour to conduct a modification of carboxyl group (after-addition). Then the resin was taken out to give the polyester resin (a) of the present invention. The result is shown in Table 1.

<Example 2> Polyester resin (b)

Into a 10-liter autoclave were charged 500 parts of terephthalic acid, 500 parts of isophthalic acid, 340 parts of ethylene glycol, 190 parts of 2,2-dimethyl-1,3-propanediol and 6 parts of titanium tetrabutoxide. Temperature was gradually raised up to 235°C during three hours under pressurization of 3.5 kg/cm.G with nitrogen to conduct an esterification. After that, a polymerization *in vacuo* was conducted by decreasing to 10 mmHg during 1 hour and, at the same time, temperature was raised up to 250°C. Then, a latter-stage polymerization was conducted as it was for 90 minutes at 1 mmHg or lower whereupon a polyester resin (A) was prepared. After that, the state of vacuum was ceased, temperature was cooled down to 220°C in a nitrogen stream, 29 parts of trimellitic anhydride was added thereto and the resulting mixture was stirred at 220°C for two hours to conduct a modification of carboxyl group (after-addition). Then the resin was taken out to give the polyester resin (b) of the present invention. The result is shown in Table 1.

<Examples 3 and 4> Polyester resins (c) and (d)

Materials mentioned in Table 1 were used and an ester interchange reaction was conducted in the same manner as in the case of the polyester resin (a). After that, stirring was done at 210°C for 4 hours to conduct a modification of carboxyl group (after-addition) whereupon the polyester resins (c) and (d) of the present invention were prepared. The results are shown in Table 1. Incidentally, in the ester interchange reaction, there was used dimethyl terephthalate, dimethyl isophthalate, dimethyl o-phthalate, dimethyl adipate, dimethyl sebacate, trimellitic anhydride or pyromellitic anhydride as the polyvalent carboxylic acid ingredient.

<Examples 5, 6, and 9 to 14> Polyester resins (e), (f), and (r) to (w)

Materials mentioned in Table 1 were used and an esterification was conducted in the same manner as in the case of the polyester resin (b). After that, stirring was done at 210°C for 4 hours to conduct a modification of carboxyl group (after-addition) whereupon the polyester resins (e) and (f) of the present invention were prepared. The results are shown in Table 1. Incidentally, in the ester interchange reaction, there was used terephthalic acid, isophthalic acid, o-phthalic acid, adipic acid, sebacic acid, trimellitic anhydride or pyromellitic anhydride as the polyvalent carboxylic acid ingredient.

<Examples 7 and 8> Polyester resins (g) and (h)

Materials mentioned in Table 1 were used and an esterification was conducted in the same manner as in the case of the polyester resin (b). After that, stirring was done at 230°C for 1 hour to conduct a modification of carboxyl group (after-addition) whereupon the polyester resins (g) and (h) of the present invention were prepared. The results are shown in Table 1.

[Table 1]

| Items (units) | | | Examples 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|
| polyester resin | | | a | b | c | d | e | f | g | h | r | s | t | u | v | w |
| resin composition and molar ratio | carboxylic acid ingredient | terephthalic acid | 49 | 30 | 40 | 40 | 49 | 60 | 45 | 55 | 49 | 49 | 79 | 19 | 48 | 45 |
| | | isophthalic acid | 49 | 69 | 30 | 45 | 49 | 38 | 45 | 15 | 49 | 49 | 19 | 79 | 48 | 45 |
| | | o-phthalic acid | | | 15 | 10 | | | | | | | | | | |
| | | adipic acid | | | 8 | 2 | | | | | | | | | | |
| | | sebacic acid | | | 6 | | | | 7 | 24 | | | | | | |
| | | trimellitic anhydride (after-addition) | 2 | 1 | 1 | | | 2 | 3 | 5 | 2 | 2 | 2 | 2 | 4 | 10 |
| | | pyromellitic anhydride(after-addition) | | | | 3 | 2 | | | 1 | | | | | | |
| | glycol ingredient | ethylene glycol | 65 | 30 | 60 | 55 | 60 | 65 | 60 | 55 | 45 | 65 | 65 | 65 | 65 | 65 |
| | | 2,2-dimethyl-1,3-propanediol | 35 | 70 | 30 | 25 | 30 | 35 | 30 | 45 | 35 | 15 | 35 | 35 | 35 | 35 |
| | | 1,4-butanediol | | | | 10 | | | 10 | | 10 | | | | | |
| | | 1,4-cyclohexane dimethanol | | | 5 | 10 | 10 | | | | | | | | | |
| | | diethylene glycol | | | 5 | | | | | | 10 | 20 | | | | |
| characteristic property of resin | | number-average molecular weight | 4,000 | 5,000 | 25,000 | 18,000 | 10,000 | 5,000 | 9,000 | 3,000 | 12,000 | 8,000 | 4,000 | 4,000 | 3,000 | 2,300 |
| | | acid value (mg KOH/g) | 12 | 6 | 5 | 20 | 17 | 11 | 15 | 25 | 10 | 12 | 13 | 14 | 30 | 50 |
| | | glass transition temperature (°C) | 60 | 58 | 40 | 49 | 65 | 60 | 48 | 20 | 39 | 45 | 60 | 61 | 61 | 64 |
| | | unreacted acid ingredients (ppm) | 1,000 | 600 | 800 | 1,800 | 1,100 | 1,000 | 1,300 | 1,900 | 1,000 | 1,100 | 900 | 1,200 | 1,800 | 1,900 |
| | | cyclic oligomer (% by mass) | 0.4 | 0.2 | 0.3 | 0.3 | 0.4 | 0.5 | 0.4 | 0.3 | 0.3 | 0.2 | 0.3 | 0.3 | 0.2 | 0.2 |
| evaluation items | | storage stability | ◎ | ◎ | ◎ | ◎ | ◎ | ◎ | ◎ | ○ | ◎ | ◎ | ◎ | ◎ | ○ | △ |
| | | adhesion to metal (%) | 100 | 100 | 100 | 100 | 100 | 100 | 100 | 100 | 100 | 100 | 100 | 100 | 100 | 100 |
| | | curability (%) | ○ | ○ | ○ | ○ | ○ | ○ | ○ | ○ | ○ | ○ | ○ | ○ | ○ | ○ |

<Comparative Examples 1 to 3> Comparative polyester resins (i) to (k)

Materials mentioned in Table 2 were used and an ester interchange reaction was conducted in the same manner as in the case of the polyester resin (a). After that, stirring was done at 170°C for 2 hours to conduct a modification of carboxyl group (after-addition) whereupon the comparative polyester resins (i) to (k) were prepared. The results are shown in Table 2.

< Comparative Examples 4 to 9> Comparative polyester resins (1) to (q)

Materials mentioned in Table 2 were used and an esterification was conducted in the same manner as in the case of the polyester resin (b). After that, stirring was done at 200°C for 3 hours to conduct a modification of carboxyl group (after-addition) whereupon the comparative polyester resins (1) to (q) were prepared. The results are shown in Table 2.

[Table 2]

| Items (units) | | | Comparative Examples | | | | | | | | |
|---|---|---|---|---|---|---|---|---|---|---|---|
| | | | 1 | 2 | 3 | 4 | 5 | 6 | 7 | 8 | 9 |
| polyester resin | | | i | j | k | l | m | n | o | p | q |
| resin composition and molar ratio | carboxylic acid ingredient | terephthalic acid | 35 | 49 | 30 | 55 | 99 | 50 | | 30 | 35 |
| | | isophthalic acid | 35 | 49 | 35 | 30 | | 50 | 98 | 35 | 35 |
| | | o-phthalic acid | | | 20 | | | | | 35 | |
| | | adipic acid | 20 | | | 10 | | | | | 20 |
| | | sebacic acid | 10 | | 10 | | | | | | 10 |
| | | trimellitic anhydride (after-addition) | | 2 | 5 | | 1 | | | | |
| | | pyromellitic anhydride(after-addition) | | | | 5 | | | 2 | | |
| | glycol ingredient | ethylene glycol | 40 | 65 | 60 | 70 | 5 | 65 | 80 | 65 | 40 |
| | | 2,2-dimethyl-1,3-propanediol | 20 | 35 | 35 | 25 | 95 | 35 | 20 | 35 | 20 |
| | | 1,4-butanediol | 20 | | | | | | | | 20 |
| | | 1,4-cyclohexane dimethanol | | | 5 | | | | | | |
| | | diethylene glycol | 20 | | | 5 | | | | | 20 |
| characteristic property of resin | | number-average molecular weight | 15,000 | 4,000 | 2,000 | 30,000 | 18,000 | 4,000 | 4,000 | 17,000 | 15,000 |
| | | acid value (mg KOH/g) | 2 | 12 | 23 | 3 | 4 | 0 | 11 | 1 | 2 |
| | | glass transition temperature (°C) | 34 | 60 | 53 | 50 | 63 | 60 | 59 | 59 | 34 |
| | | unreacted acid ingredients (ppm) | 4,000 | 5,000 | 6,000 | 7,000 | 1,500 | 500 | 2,000 | 900 | 700 |
| | | cyclic oligomer (% by mass) | 0.6 | 0.4 | 0.5 | 0.7 | 2.0 | 0.3 | 1.0 | 0.4 | 0.6 |
| evaluation items | | storage stability | × | Δ | Δ | × | Δ | ○○ | Δ | ○○ | Δ |
| | | adhesion to metal (%) | 30 | 100 | 100 | 50 | 70 | 0 | 100 | 0 | 20 |
| | | curability (%) | × | ○ | ○ | × | Δ | × | ○ | × | × |

## Claims

1. A polyester resin prepared from polyvalent carboxylic acid and glycol, **characterized in that** a total content of a terephthalic acid ingredient and an isophthalic acid ingredient is 70% by mol or more when a total content of the polyvalent carboxylic acid ingredient is taken as 100% by mol,
a total content of an ethylene glycol ingredient and a 2,2-dimethyl-1,3-propanediol ingredient is 80% by mol or more when a total content of the glycol ingredient is taken as 100% by mol,
its acid value is 5 mg KOH/g or more,
a total content of an unreacted polyvalent carboxylic acid ingredient is 2,000 ppm or less and
a content of a cyclic oligomer is 0.5% by mass or less.

2. The polyester resin according to claim 1, wherein its number-average molecular weight is 25,000 or less.

## INTERNATIONAL SEARCH REPORT

International application No.
PCT/JP2018/008954

A. CLASSIFICATION OF SUBJECT MATTER
Int. Cl. C08G63/183(2006.01)i, G03G9/087(2006.01)i

According to International Patent Classification (IPC) or to both national classification and IPC

B. FIELDS SEARCHED

Minimum documentation searched (classification system followed by classification symbols)
Int. Cl. C08G63/00-64/42

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 2009-221316 A (UNITIKA LTD.) 01 October 2009, claims, paragraphs [0057]-[0066], table 1, examples (Family: none) | 1-2 |
| X | JP 2011-184642 A (UNITIKA LTD.) 22 September 2011, claims, paragraphs [0065]-[0070], table 1, examples (Family: none) | 1-2 |
| X | JP 2007-31509 A (UNITIKA LTD.) 08 February 2007, claims, paragraphs [0094]-[0098], tables 1, 2, examples (Family: none) | 1-2 |
| X | JP 2010-163517 A (UNITIKA LTD.) 29 July 2010, claims, paragraphs [0078]-[0091], [0094], tables 1, 2, examples (Family: none) | 1-2 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26.03.2018 | 03.04.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2018/008954

C (Continuation). DOCUMENTS CONSIDERED TO BE RELEVANT

| Category* | Citation of document, with indication, where appropriate, of the relevant passages | Relevant to claim No. |
|---|---|---|
| X | JP 2015-160875 A (UNITIKA LTD.) 07 September 2015, claims, paragraphs [0060]-[0065], tables 1, 2, examples (Family: none) | 1-2 |
| A | JP 2004-300285 A (UNITIKA LTD.) 28 October 2004 (Family: none) | 1-2 |
| A | JP 2008-19375 A (TOYOBO CO., LTD.) 31 January 2008 (Family: none) | 1-2 |
| A | JP 2008-24726 A (UNITIKA LTD.) 07 February 2008 (Family: none) | 1-2 |
| A | JP 2007-277497 A (TOYOBO CO., LTD.) 25 October 2007 (Family: none) | 1-2 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013178504 A
- JP 2002212530 A